# EUROPEAN PATENT APPLICATION

(11) **EP 4 618 181 A1**
(43) Date of publication of application: **17.09.2025**
(21) Application number: 23903945.6
(22) Date of filing: 12.12.2023
(51) Int. Cl.: H01M 4/136, H01M 4/58, H01M 10/052, H01M 4/02

(54) **CATHODE AND LITHIUM SECONDARY BATTERY COMPRISING SAME**

(30) Priority: 13.12.2022 KR 20220173839
(71) Applicant: LG CHEM, LTD., Seoul 07336 (KR)
(72) Inventor: JUN, In Kook, Daejeon 34122 (KR); KIM, Hyeon Woo, Ulju-gun Ulsan 44919 (KR); SEO, Dong Hwa, Ulju-gun Ulsan 44919 (KR); PARK, Yoo Jong, Ulju-gun Ulsan 44919 (KR); LEE, Eung Ju, Daejeon 34122 (KR); LEE, Kang Hyeon, Daejeon 34122 (KR)
(74) Representative: Hoffmann Eitle
(86) International application number: PCT/KR2023/020383
(87) International publication number: WO 2024/128742

(57) **Abstract**

The present invention relates to a positive electrode for a lithium secondary battery, having improved adhesive strength between a current collector and a positive electrode active material layer as well as energy density, and a lithium secondary battery. Particularly, the present invention relates to a positive electrode comprising: a positive electrode current collector; and a positive electrode active material layer formed on the positive electrode current collector, wherein the positive electrode active material layer comprises a first lithium iron phosphate-based positive electrode active material having an average particle diameter (D₅₀) of 4 µm to 20 µm and a second lithium iron phosphate-based positive electrode active material having an average particle diameter (D₅₀) of 100 nm to 2 µm, a weight ratio of the first lithium iron phosphate-based positive electrode active material and the second lithium iron phosphate-based positive electrode active material is 90:10 to 50:50, and an adhesive strength between the positive electrode current collector and the positive electrode active material layer is 6.00 N/cm or more, and a lithium secondary battery comprising the positive electrode.

## Description

### TECHNICAL FIELD

### Cross-reference to Related Applications

This application claims the benefit of Korean Patent Application No. 10-2022-0173839, filed on December 13, 2022, in the Korean Intellectual Property Office, the contents of which are incorporated herein by reference.

### Technical Field

The present invention relates to a positive electrode for a lithium secondary battery and a lithium secondary battery comprising the same.

### BACKGROUND ART

According to the increase in the technical development and demand for mobile devices, demand for secondary batteries as an energy source is being rapidly increasing. Among the secondary batteries, lithium secondary batteries having high energy density, a high voltage, long cycle lifetime and a low self-discharge rate come into commercial use and are widely used.

Currently, as the major positive electrode active material of lithium secondary batteries, a NCM-based positive electrode active material containing nickel, cobalt, manganese and/or aluminum or a lithium iron phosphate (LFP)-based positive electrode active material is used. The LFP-based positive electrode active material has somewhat low energy density, and study on a lithium manganese iron phosphate (LMFP)-based positive electrode active material containing iron and manganese simultaneously is being actively conducted to increase the energy density.

The LFP-based positive electrode active material and the LMFP-based positive electrode active material have low conductivity, and a small-sized single particle type is required to apply to an electrode in order to increase the conductivity. However, an electrode in which a single particle type positive electrode active material is applied, has defects of exhibiting very low energy density compared to an electrode in which a secondary particle type positive electrode active material having a micrometer size is applied. Meanwhile, in the case of the electrode in which a secondary particle type positive electrode active material having a micrometer size is applied, there are defects of exhibiting separation phenomenon between a current collector and a positive electrode active material layer after performing a rolling process for the manufacture of the electrode.

Accordingly, the development of a positive electrode having improved adhesive strength between a current collector and a positive electrode active material layer as well as energy density per volume, is required.

### DISCLOSURE OF THE INVENTION

### TECHNICAL PROBLEM

The present invention is to solve the above-described defects and to provide a positive electrode for a lithium secondary battery, having improved adhesive strength between a current collector and a positive electrode active material layer as well energy density per volume, and a lithium secondary battery.

### TECHNICAL SOLUTION

The present invention provides a positive electrode and a lithium secondary battery.
(1) The present invention provides a positive electrode comprising: a positive electrode current collector; and a positive electrode active material layer formed on the positive electrode current collector, wherein the positive electrode active material layer comprises a first lithium iron phosphate-based positive electrode active material having an average particle diameter (D₅₀) of 4 µm to 20 µm and a second lithium iron phosphate-based positive electrode active material having an average particle diameter (D₅₀) of 100 nm to 2 µm, a weight ratio of the first lithium iron phosphate-based positive electrode active material and the second lithium iron phosphate-based positive electrode active material is 90:10 to 50:50, and an adhesive strength between the positive electrode current collector and the positive electrode active material layer is 6.00 N/cm or more.
(2) The present invention provides the positive electrode according to (1), wherein a ratio of the average particle diameters (D₅₀) of the first lithium iron phosphate-based positive electrode active material and the second lithium iron phosphate-based positive electrode active material is 2:1 to 200:1.
(3) The present invention provides the positive electrode according to (1) or (2), wherein the first lithium iron phosphate-based positive electrode active material has a secondary particle type.
(4) The present invention provides the positive electrode according to one of (1) to (3), wherein the second lithium iron phosphate-based positive electrode active material has one or more selected from a secondary particle type and a single particle type.
(5) The present invention provides the positive electrode according to one of (1) to (4), wherein the first lithium iron phosphate-based positive electrode active material has a composition represented by Formula 1.

   [Formula 1] Li₁₊ₐ₁Fe₁₋ₓ₁M¹ₓ₁(PO_{4-b1})X¹_{c1}

   In Formula 1,
   M¹ is one or more selected from Mn, Ni and Co,
   X¹ is one or more selected from F, Cl and S, and
   -0.1≤a1≤0.1, 0≤x1<1, 0≤b1≤1, and 0≤c1≤0.1 are satisfied.
(6) The present invention provides the positive electrode according to one of (1) to (5), wherein the second lithium iron phosphate-based positive electrode active material has a composition represented by Formula 2.

   [Formula 2] Li₁₊ₐ₂Fe₁₋ₓ₂M²ₓ₂(PO_{4-b2})X²_{c2}

   In Formula 2,
   M² is one or more selected from Mn, Ni and Co,
   X² is one or more selected from F, Cl and S, and
   -0.1≤a2≤0.1, 0≤x2<1, 0≤b2≤1, and 0≤c2≤0.1 are satisfied.
(7) The present invention provides the positive electrode according to one of (1) to (6), wherein a porosity of the positive electrode active material layer is less than 40%.
(8) The present invention provides the positive electrode according to one of (1) to (7), wherein the content of the second lithium iron phosphate-based positive electrode active material decreases from one side of the positive electrode active material layer, the one side being near the positive electrode current collector to the other side of the positive electrode active material layer, the other side being far from the positive electrode current collector.
(9) The present invention provides a lithium secondary battery comprising the positive electrode according to one of (1) to (8).

### ADVANTAGEOUS EFFECTS

The positive electrode according to the present invention includes a first lithium iron phosphate-based positive electrode active material having an average particle diameter (D₅₀) of 4 µm to 20 µm and a second lithium iron phosphate-based positive electrode active material having an average particle diameter (D₅₀) of 100 nm to 2 µm in a weight ratio of 90:10 to 50:50, and thus may have improved effects of adhesive strength between a positive electrode current collector and a positive electrode active material layer and secure excellent rate properties.

Accordingly, the positive electrode according to the present invention may be usefully used in a lithium secondary battery requiring high energy density, high stability and long-life characteristics.

### BRIED DESCRIPTION OF DRAWING

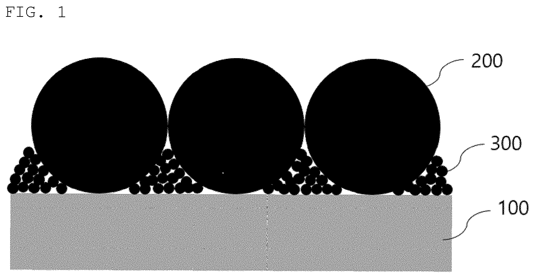

FIG. 1 is a diagram showing an embodiment of the present invention.

### BEST MODE FOR CARRYING OUT THE INVENTION

Hereinafter, the present invention will be explained in more detail.

Words or terms used in the present description shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the present description, an average particle diameter (D₅₀) may be defined as a particle diameter corresponding to 50% of an accumulated volume on the particle diameter distribution curve of particles. The average particle diameter (D₅₀) may be measured using, for example, a laser diffraction method. More specifically, a lithium complex transition metal oxide may be dispersed in a dispersion medium and introduced in a laser diffraction particle size measurement apparatus (for example, Microtrac Mt 3000), ultrasonic waves of about 28 kHz may be irradiated with an output of 60W, and an average particle diameter (D₅₀) corresponding to 50% of particle diameter distribution in the measurement apparatus may be computed.

In the present description, the adhesive strength between a positive electrode current collector and a positive electrode active material layer is a value measured after rolling a positive electrode so as to obtain the porosity of the positive electrode active material layer to less than 40%, particularly, 30% to 35%, more particularly, 30% to 32%.

In the present description, the positive electrode active material of a single particle type has a contrasting concept to the positive electrode active material of a secondary particle type of a spherical shape, formed by the agglomeration of dozens to a few hundred of primary particles, and means a positive electrode active material formed of 10 or less primary particles. Particularly, in the present description, the positive electrode active material of a single particle type may be a single particle composed of one primary particle, and a secondary particle type in which several primary particles are agglomerated. In this case, the "primary particle" means the minimum unit of particles recognized when observing a positive electrode active material through a scanning electron microscope, and the "secondary particle" means a secondary structure formed by the agglomeration of multiple primary particles.

The inventors of the present invention found that if a positive electrode includes: a positive electrode current collector; and a positive electrode active material layer formed on the positive electrode current collector, and the positive electrode active material layer includes a first lithium iron phosphate-based positive electrode active material having an average particle diameter (D₅₀) of 4 µm to 20 µm and a second lithium iron phosphate-based positive electrode active material having an average particle diameter (D₅₀) of 100 nm to 2 µm in a weight ratio of 90:10 to 50:50, the adhesive strength between a positive electrode current collector and a positive electrode active material layer increased to 6.00 N/cm or more, while improving energy density, and the adhesive strength between the current collector and the positive electrode active material layer was improved, and completed the present invention.

### Positive Electrode

The present invention provides a positive electrode comprising: a positive electrode current collector; and a positive electrode active material layer formed on the positive electrode current collector, wherein the positive electrode active material layer comprises a first lithium iron phosphate-based positive electrode active material having an average particle diameter (D₅₀) of 4 µm to 20 µm and a second lithium iron phosphate-based positive electrode active material having an average particle diameter (D₅₀) of 100 nm to 2 µm, the weight ratio of the first lithium iron phosphate-based positive electrode active material and the second lithium iron phosphate-based positive electrode active material is 90:10 to 50:50, and adhesive strength between the positive electrode current collector and the positive electrode active material layer is 6.00 N/cm or more.

A LFP-based positive electrode active material and a LMFP-based positive electrode active material have low conductivity, and in order to increase the conductivity, a small-sized single particle type is required to apply to an electrode, but an electrode in which a positive electrode active material of a single particle type is applied has defects of very low energy density. Meanwhile, in case of an electrode in which a positive electrode active material having a secondary particle type with a micrometer size is applied to increase energy density, there were defects of generating separation phenomenon between a current collector and a positive electrode active material layer after performing a rolling process for manufacturing the electrode.

However, the positive electrode according to the present invention includes the first lithium iron phosphate-based positive electrode active material having an average particle diameter (D₅₀) of 4 µm to 20 µm and the second lithium iron phosphate-based positive electrode active material having an average particle diameter (D₅₀) of 100 nm to 2 µm, and energy density per volume may be improved, and the adhesive strength between a positive electrode current collector and a positive electrode active material layer may increase to 6.00 N/cm or more, and there are advantages of improving the adhesive strength between the current collector and the positive electrode active material layer.

Meanwhile, if the adhesive strength between the positive electrode current collector and the positive electrode active material layer is less than 6.00 N/cm, electrode processability may be deteriorated, including electrode separation.

According to the present invention, the weight ratio of the first lithium iron phosphate-based positive electrode active material and the second lithium iron phosphate-based positive electrode active material is 90:10 to 50:50. Particularly, the weight ratio of the first lithium iron phosphate-based positive electrode active material and the second lithium iron phosphate-based positive electrode active material may be 90:10 to 50:50, or 80:20 to 50:50. If the first lithium iron phosphate-based positive electrode active material and the second lithium iron phosphate-based positive electrode active material are included within the range, the energy density of the positive electrode may be improved, the second lithium iron phosphate-based positive electrode active material may be suitably positioned in the pores among the first lithium iron phosphate-based positive electrode active material to increase the filling density of particles and increase the amount of a binder making contact with the current collector to improve the adhesive strength between the current collector and the positive electrode active material layer, and excellent rate properties may be secured. Meanwhile, if the first lithium iron phosphate-based positive electrode active material is greater than 90 wt% with respect to the total weight of the first lithium iron phosphate-based positive electrode active material and the second lithium iron phosphate-based positive electrode active material, the second lithium iron phosphate-based positive electrode active material may be insufficiently filled in the pores among the first lithium iron phosphate-based positive electrode active material, and electrode adhesive strength may be low. If the first lithium iron phosphate-based positive electrode active material is less than 50 wt%, the ratio of the small-sized second lithium iron phosphate-based positive electrode active material may increase to reduce the electron conductivity of the electrode, and rate properties may be deteriorated.

The positive electrode current collector may include a metal having high conductivity without specific limitation, as long as a positive electrode active material layer may easily attach to, and no reactivity is shown in the voltage range of a battery. The positive electrode current collector may use, for example, stainless steel, aluminum, nickel, titanium, baked carbon, or aluminum or stainless steel surface treated with carbon, nickel, titanium, silver or the like. In addition, the positive electrode current collector may commonly have a thickness of 3 µm to 500 µm, and minute embossing may be formed on the surface of the positive electrode current collector to increase the adhesive strength of the positive electrode active material. For example, various types including a film, a sheet, a foil, a net, a porous body, a foamed body and a nonwoven fabric may be used.

The positive electrode active material layer according to the present invention includes the first lithium iron phosphate-based positive electrode active material having an average particle diameter (D₅₀) of 4 µm to 20 µm and the second lithium iron phosphate-based positive electrode active material having an average particle diameter (D₅₀) of 100 nm to 2 µm. Since the positive electrode active material layer includes the first lithium iron phosphate-based positive electrode active material having a large average particle diameter (D₅₀) (positive electrode active material having large-sized particles) and the second lithium iron phosphate-based positive electrode active material having a small average particle diameter (D₅₀) (positive electrode active material having small-sized particles), the positive electrode according to the present invention has a large adhesive strength of 6.00 N/cm or more between the positive electrode current collector and the positive electrode active material layer.

The first lithium iron phosphate-based positive electrode active material has an average particle diameter (D₅₀) of 4 µm to 20 µm. Particularly, the average particle diameter (D₅₀) of the first lithium iron phosphate-based positive electrode active material may be 4 µm, 5 µm or more, 10 pm, 15 µm, 20 µm or less. If the average particle diameter (D₅₀) of the first lithium iron phosphate-based positive electrode active material is within the range, efficient mixing with the second lithium iron phosphate-based positive electrode active material may be possible, the energy density per volume of the positive electrode may increase, and the adhesive strength between the positive electrode current collector and the positive electrode active material may increase.

Meanwhile, if the average particle diameter (D₅₀) of the first lithium iron phosphate-based positive electrode active material is less than 4 µm, efficient mixing with the second lithium iron phosphate-based positive electrode active material may be difficult, and if the average particle diameter (D₅₀) is greater than 20 µm, electrochemical performance may be deteriorated.

The second lithium iron phosphate-based positive electrode active material has an average particle diameter (D₅₀) of 100 nm to 2 µm. Particularly, the average particle diameter (D₅₀) of the second lithium iron phosphate-based positive electrode active material may be 100 nm, 200 nm, 500 nm or more, 1 µm, 2 µm or less. If the average particle diameter (D₅₀) of the second lithium iron phosphate-based positive electrode active material is within the range, the pores among the first lithium iron phosphate-based positive electrode active material particles may be efficiently filled, and accordingly, the energy density per volume of the electrode may be improved, the amount of a binder making contact with the current collector may increase to improve electrode adhesive strength.

Meanwhile, if the average particle diameter (D₅₀) of the second lithium iron phosphate-based positive electrode active material is less than 100 nm, the energy density per volume of the electrode may decrease, the specific surface area of the positive electrode active material may increase to increase side reactions with an electrolyte, and the electrochemical performance may be deteriorated. In addition, if the average particle diameter (D₅₀) is greater than 2 µm, the pores among the first lithium iron phosphate-based positive electrode active material particles may not be efficiently filled, and the adhesive strength may be reduced.

According to the present invention, the ratio of the average particle diameters (D₅₀) of the first lithium iron phosphate-based positive electrode active material and the second lithium iron phosphate-based positive electrode active material may be 2:1 to 200:1. Particularly, the ratio of the average particle diameters (D₅₀) of the first lithium iron phosphate-based positive electrode active material and the second lithium iron phosphate-based positive electrode active material may be 2:1, 5:1 or more, 10:1, 50:1, 100:1, 200:1 or less. If the ratio of the average particle diameters (D₅₀) of the first lithium iron phosphate-based positive electrode active material and the second lithium iron phosphate-based positive electrode active material is within the range, the second lithium iron phosphate-based positive electrode active material may be suitably positioned in the pores among the first lithium iron phosphate-based positive electrode active material, and the filling density of particles may increase, the amount of a binder making contact with the current collector may increase to improve the adhesive strength between the current collector and the positive electrode active material layer.

According to the present invention, the first lithium iron phosphate-based positive electrode active material may have a secondary particle type. Generally, the lithium iron phosphate-based positive electrode active material has low electrical conductivity and ion conductivity, but the secondary particle composed of the small primary particles may overcome the defects and increase a particle size, thereby increasing the energy density per volume of a positive electrode.

According to the present invention, the second lithium iron phosphate-based positive electrode active material may be one or more selected from a secondary particle type and a single particle type. Particularly, the second lithium iron phosphate-based positive electrode active material may be a single particle type. The positive electrode active material of the single particle type may be a single particle composed of one primary particle or may be a secondary particle type in which several primary particles are agglomerated.

According to the present invention, the first lithium iron phosphate-based positive electrode active material may have a composition represented by Formula 1 below.

[Formula 1] Li₁₊ₐ₁Fe₁₋ₓ₁M¹ₓ₁(PO_{4-b1})X¹_{c1}

In Formula 1,
M¹ is one or more selected from Mn, Ni and Co,
X¹ is one or more selected from F, Cl and S, and
-0.1≤a1≤0.1, 0≤x1<1, 0≤b1≤1, and 0≤c1≤0.1 are satisfied.

According to the present invention, the second lithium iron phosphate-based positive electrode active material has a composition represented by Formula 2 below.

[Formula 2] Li₁₊ₐ₂Fe₁₋ₓ₂M²ₓ₂(PO_{4-b2})X²_{c2}

In Formula 2,
M² is one or more selected from Mn, Ni and Co,
X² is one or more selected from F, Cl and S, and
-0.1≤a2≤0.1, 0≤x2<1, 0≤b2≤1, and 0≤c2≤0.1 are satisfied.

According to the present invention, the content of the second lithium iron phosphate-based positive electrode active material may decrease from one side of the positive electrode active material layer, near the positive electrode current collector to the other side of the positive electrode active material layer, far from the positive electrode current collector. Particularly, as shown in FIG. 1 which is a diagram showing an embodiment of the present invention, the content of the second lithium iron phosphate-based positive electrode active material 300 may gradually decrease from one side of the positive electrode active material layer, near the positive electrode current collector 100 to the other side of the positive electrode active material layer, far from the positive electrode current collector. In this case, the second lithium iron phosphate-based positive electrode active material 300 may be filled in the pores between the first lithium iron phosphate-based positive electrode active material 200 having a spherical shape and the current collector 100 to increase the amount of a binder making contact with the current collector, and may compensate the reduction of adhesive strength, which may be generated due to the presence of the pores, and thus, the adhesive strength between the current collector and the positive electrode active material layer may increase even further.

The positive electrode active material layer may selectively further include a conductive agent, a binder, a dispersant or the like as necessary together with the first lithium iron phosphate-based positive electrode active material and the second lithium iron phosphate-based positive electrode active material.

In this case, the total sum of the content of the first lithium iron phosphate-based positive electrode active material and the content of the second lithium iron phosphate-based positive electrode active material may be 80 wt% to 99 wt%, more particularly, 85 wt% to 95 wt% on the basis of the total weight of the positive electrode active material layer. If the first lithium iron phosphate-based positive electrode active material and the second lithium iron phosphate-based positive electrode active material are included in the positive electrode active material layer in the content range, excellent capacity properties may be exhibited.

The conductive agent is used for providing an electrode with conductivity, and is not specifically limited as long as it does not induce the chemical change in a constituent battery and has electron conductivity. Particular embodiments may include: graphite such as natural graphite and artificial graphite; carbonaceous materials such as carbon black, acetylene black, Ketjen black, channel black, furnace black, lamp black, thermal black and a carbon fiber; metal powders or metal fibers of copper, nickel, aluminum, silver or the like; conductive tubes such as carbon nanotubes; conductive whiskers such as zinc oxide whiskers and potassium titanate whiskers; conductive metal oxides such as titanium oxide; conductive polymers such as polyphenylene derivatives, and one or a mixture of two or more thereof may be used. The conductive agent may be included in the content of 0.1 wt% to 15 wt% on the basis of the total weight of the positive electrode active material layer.

The binder may play the role of improving the adhesive strength among the positive electrode active material particles and the adhesive strength between the positive electrode active material and the current collector. Particular embodiments may include polyvinylidene fluoride (PVDF), a polyvinylidene fluoride-hexafluoropropylene copolymer (PVDF-co-HFP), polyvinyl alcohol, polyacrylonitrile, polymethyl methacrylate, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber (SBR), a fluoro rubber, polyacrylic acid, and polymers in which the hydrogen thereof is substituted with Li, Na or Ca and diverse copolymers thereof, and one or a mixture of two or more thereof may be used. The binder may be included in the content of 0.1 wt% to 15 wt% on the basis of the total weight of the positive electrode active material layer.

The dispersant may include an aqueous dispersant or an organic dispersant such as N-methyl-2-pyrrolidone.

According to the present invention, the porosity of the positive electrode active material layer may be less than 40%. Particularly, the porosity of the positive electrode active material layer may be 20%, 30% or more 32%, 35% or less, less than 40%. In this case, the energy density per volume of an electrode may be improved while the positive electrode active material particles may not be broken by a rolling pressure.

The positive electrode may be manufactured by the common manufacturing method of a positive electrode. Particularly, a positive electrode slurry prepared by dissolving or dispersing the positive electrode active materials and selectively a binder, a conductive agent, a dispersant or the like as necessary in a solvent may be applied on a positive electrode current collector, dried and rolled to manufacture the positive electrode.

The solvent may be a solvent commonly used in this technical field and may include dimethyl sulfoxide (DMSO), isopropyl alcohol, N-methyl pyrrolidone (NMP), dimethyl formamide (DMF), acetone or water, and one or a mixture of two or more may be used. The amount of the solvent may be sufficient if the positive electrode active material, the conductive agent and the dispersant are dissolved or dispersed, and if a viscosity exhibiting excellent thickness uniformity during the application for the manufacture of a positive electrode is obtained, considering the application thickness of a slurry and a preparation yield.

In addition, as another method, the positive electrode may be manufactured by casting a composition for forming the positive electrode active material layer on a separate support, and laminating a film obtained by separating from the support on a positive electrode current collector.

### Secondary Battery

In addition, the present invention provides a lithium secondary battery including the positive electrode.

The lithium secondary battery specifically includes a positive electrode, a negative electrode oppositely disposed to the positive electrode, and a separator and an electrolyte, disposed between the positive electrode and the negative electrode. The positive electrode is the same as described above, and particular explanation thereon will be omitted, and the remaining configurations will be explained in particular hereinafter.

Meanwhile, the lithium secondary battery may selectively further include a battery container for including the electrode assembly of the positive electrode, the negative electrode and the separator, and a sealing member for sealing the battery container.

In the lithium secondary battery, the negative electrode includes a negative electrode current collector and a negative electrode active material layer positioned on the negative electrode current collector.

The negative electrode current collector is not specifically limited as long as it does not induce the chemical change of a battery and has high conductivity. For example, copper, stainless steel, aluminum, nickel, titanium, baked carbon, copper or stainless steel, surface treated with carbon, nickel, titanium, silver or the like, an aluminum-cadmium alloy or the like may be used. In addition, the negative electrode current collector may commonly have a thickness of 3 µm to 500 µm, and may reinforce the adhesive strength of the negative electrode active material by forming minute embossing at the surface of the negative electrode current collector like the positive electrode current collector. For example, various shapes including a film, a sheet, a foil, a net, a porous body, a foamed body, a non-woven fabric or the like may be used.

The negative electrode active material layer may selectively include a binder and a conductive agent together with the negative electrode active material.

As the negative electrode active material, compounds capable of reversible intercalation and deintercalation may be used. Particular embodiments may include: carbonaceous materials such as artificial graphite, natural graphite, graphitized carbon fibers and amorphous carbon; metallic compounds capable of forming alloys with lithium, such as Si, Al, Sn, Pb, Zn, Bi, In, Mg, Ga, Cd, a Si alloy, a Sn alloy and an Al alloy; metal oxides capable of doping or de-doping lithium, such as SiO_{β} (0<β<2), SnO₂, vanadium oxide and lithium vanadium oxide; or composites including the metallic compound and the carbonaceous material, such as a Si-C composite and a Sn-C composite, and any one among them or a mixture of two or more thereof may be used. In addition, as the negative electrode active material, a metal lithium thin film may be used. In addition, the carbon material may use both low crystalline carbon and high crystalline carbon. Typical examples of the low crystalline carbon include soft carbon and hard carbon, and typical examples of the high crystalline carbon include amorphous, plate-type, flake-type, spherical or fibrous natural graphite or artificial graphite, Kish graphite, pyrolytic carbon, mesophase pitch based carbon fiber, meso-carbon microbeads, mesophase pitches and baked carbon at a high temperature such as petroleum or coal tar pitch derived cokes.

The negative electrode active material may be included in 80 wt% to 99 wt% on the basis of the total weight of the negative electrode active material layer.

The binder is a component assisting the combination among the conductive agent, the active material and the current collector and is commonly added in 0.1 wt% to 10 wt% on the basis of the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, and diverse copolymers thereof.

The conductive agent is a component for improving the conductivity of the negative electrode active material even further, and may be included in the content of 10 wt% or less, particularly, 5 wt% or less on the basis of the total weight of the negative electrode active material layer. The conductive agent is not specifically limited as long as it does not induce the chemical change of a battery and has conductivity. For example, graphite such as natural graphite and artificial graphite; carbon black such as acetylene black, Ketjen black, channel black, furnace black, lamp black, and thermal black; conductive fibers such as carbon fibers and metal fibers; metal powders such as carbon fluoride, aluminum and nickel powders; conductive whiskers such as zinc oxide whiskers and potassium titanate whiskers; conductive metal oxides such as titanium oxide; or conductive polymers such as polyphenylene derivatives may be used.

The negative electrode active material layer may be formed by applying a composition for forming a negative electrode active material layer, prepared by dissolving or dispersing a negative electrode active material and selectively a binder and a conductive agent in a solvent, on a negative electrode current collector, and drying, or by casting the composition for forming a negative electrode active material layer on a separate supporter, and laminating a film obtained by separating from the support on a negative electrode current collector.

Meanwhile, in the lithium secondary battery, the separator is for separating the negative electrode and the positive electrode and for providing the moving passage of lithium ions, and uses any separators used in common lithium secondary batteries, without specific limitation, and particularly, separators having low resistance to the movement of electrolyte ions and excellent electrolyte impregnation capacity are preferable. Particularly, a porous polymer film, for example, a porous polymer film formed by a polyolefin-based polymer such as an ethylene homopolymer, a propylene homopolymer, an ethylene/butene copolymer, an ethylene/hexene copolymer and an ethylene/methacrylate copolymer, or a laminated structure of two or more thereof may be used. In addition, a common nonwoven fabric, for example, a non-woven fabric formed of a high melting point glass fiber, a polyethyleneterephthalate fiber or the like may be used. In addition, a separator coated with and including a ceramic component or a polymer material for securing heat resistance or mechanical strength may be used, and selectively, a single layer or a multilayer structure may be used.

In addition, the electrolyte used in the present invention may include an organic liquid electrolyte, an inorganic liquid electrolyte, a solid polymer electrolyte, a gel-type polymer electrolyte, a solid inorganic electrolyte, a molten inorganic electrolyte or the like, which can be used during manufacturing a lithium secondary battery, without limitation.

Particularly, the electrolyte may include an organic solvent and a lithium salt.

The organic solvent may use any one which may play the role of a medium for moving ions involving the electrochemical reaction of a battery, without specific limitation. Particularly, as the organic solvent, ester-based solvents such as methyl acetate, ethyl acetate, γ-butyrolactone, and ε-caprolactone; ether-based solvents such as dibutyl ether and tetrahydrofuran; ketone-based solvents such as cyclohexanone; aromatic hydrocarbon-based solvents such as benzene and fluorobenzene; carbonate-based solvents such as dimethylcarbonate (DMC), diethylcarbonate (DEC), ethyl methyl carbonate (EMC), ethylene carbonate (EC), and propylene carbonate (PC); alcohol-based solvents such as ethyl alcohol and isopropyl alcohol; nitriles such as R-CN (R is a hydrocarbon group of a linear, branched or cyclic structure having 2 to 20 carbon atoms); amides such as dimethylformamide; dioxolanes such as 1,3-dioxolane; or sulfolanes may be used. Among them, the carbonate-based solvent is preferable, and a mixture of a cyclic carbonate having high ionic conductivity and high dielectricity for improving the charge and discharge performance of a battery (for example, ethylene carbonate or propylene carbonate), and a linear carbonate-based compound of a low viscosity (for example, ethyl methyl carbonate, dimethyl carbonate or diethyl carbonate) is more preferable. In this case, if the cyclic carbonate and the chain-type carbonate are mixed in a volume ratio of about 1:1 to about 1:9 and used, the excellent performance of the electrolyte may be exhibited.

The lithium salt may use any compounds that may provide lithium ions used in a lithium secondary battery, without specific limitation. Particularly, the anion of the lithium salt may be at least one or more selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻, and as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂ or the like may be used. The concentration of the lithium salt may be in a range of 0.1 to 2.0 M. If the concentration of the lithium salt is within the range, the electrolyte may have appropriate conductivity and viscosity to exhibit excellent electrolyte performance, and the lithium ions may move effectively.

In the electrolyte, one or more additives may be further included in addition to the constituent components of the electrolyte for the purpose of improving the life characteristics of a battery, suppressing the reduction of battery capacity, and improving the discharge capacity of a battery. For example, one or more additives of haloalkylene carbonate-based compounds such as difluoroethylene carbonate, pyridine, triethyl phosphite, triethanolamine, cyclic ether, ethylenediamine, n-glyme, triamide hexaphosphate, nitrobenzene derivatives, sulfur, a quinone imine dye, N-substituted oxazolidinone, N,N-substituted imidazolidine, ethylene glycol dialkyl ether, ammonium salts, pyrrole, 2-methoxyethanol or aluminum trichloride, may be used. In this case, the additive may be included in 0.1 to 5 wt% on the basis of the total weight of the electrolyte.

As described above, the lithium secondary battery including the positive electrode active material according to the present invention shows high energy density and high stability, and may be useful for portable devices such as a cellular phone, a laptop computer and a digital camera, and electric vehicle fields such as a hybrid electric vehicle (HEV).

Accordingly, a battery module including the lithium secondary battery as a unit cell, and a battery pack including the same may be provided.

The battery module or the battery pack may be used as the power source of one or more large- and medium-sized devices including: a power tool; electric motor vehicles including an electric vehicle (EV), a hybrid electric vehicle and a plug-in hybrid electric vehicle (PHEV); and a power storage system.

The shape of the lithium secondary battery of the present invention is not specifically limited, but may be a cylinder type using a can, a prismatic type, a pouch type or a coin type.

The lithium secondary battery according to the present invention may be used in a battery cell used as the power source of small-sized devices, and may preferably be used as a unit cell in large- and medium-sized battery modules including multiple battery cells.

Examples of the large- and medium-sized devices may include an electric vehicle, a hybrid electric vehicle and a plug-in hybrid electric vehicle and a power storage system, without limitation.

### BEST MODE FOR CARRYING OUT THE INVENTION

Hereinafter, embodiments will be explained in detail to particularly explain the present invention. However, the embodiments of the present invention can be modified into various other types, and the scope of the present invention should not be interpreted to be limited to the embodiments below. The embodiments of the present invention are provided to more completely explain the present invention for a person having average knowledge in the art.

### Examples and Comparative Examples

### Example 1

A positive electrode material was prepared by mixing a first lithium iron phosphate-based positive electrode active material of a secondary particle type, having an average particle diameter (D₅₀) of 6 µm (component: LiFePO₄) and a second lithium iron phosphate-based positive electrode active material of a single particle type, having an average particle diameter (D₅₀) of 1 µm (component: LiFePO₄) in a weight ratio of 50:50.

The positive electrode material, a PVDF binder and a carbon black conductive agent were mixed in a weight ratio of 90:5:5 in a N-methyl-2-pyrrolidone (NMP) solvent to prepare a positive electrode slurry. The positive electrode slurry was applied on one side of an aluminum current collector (thickness: 20 µm) so that a thickness after drying became 40 µm (loading amount: 10.3-11.4 mg/cm²), dried (remove NMP in an oven of 80°C and remove moisture in a vacuum oven of 110°C), and rolled so that the porosity of a positive electrode active material layer became 30-32% to manufacture a positive electrode.

In this case, the content of the second lithium iron phosphate-based positive electrode active material gradually decreased from one side of the positive electrode active material layer, near the positive electrode current collector to the other side of the positive electrode active material layer, far from the positive electrode current collector.

### Example 2

A positive electrode was manufactured by the same method as Example 1 except for using a positive electrode material obtained by mixing a first lithium iron phosphate-based positive electrode active material of a secondary particle type, having an average particle diameter (D₅₀) of 6 µm (component: LiFePO₄) and a second lithium iron phosphate-based positive electrode active material of a single particle type, having an average particle diameter (D₅₀) of 1 µm (component: LiFePO₄) in a weight ratio of 60:40.

### Example 3

A positive electrode was manufactured by the same method as Example 1 except for using a positive electrode material obtained by mixing a first lithium iron phosphate-based positive electrode active material of a secondary particle type, having an average particle diameter (D₅₀) of 6 µm (component: LiFePO₄) and a second lithium iron phosphate-based positive electrode active material of a single particle type, having an average particle diameter (D₅₀) of 1 µm (component: LiFePO₄) in a weight ratio of 70:30.

### Example 4

A positive electrode was manufactured by the same method as Example 1 except for using a positive electrode material obtained by mixing a first lithium iron phosphate-based positive electrode active material of a secondary particle type, having an average particle diameter (D₅₀) of 6 µm (component: LiFePO₄) and a second lithium iron phosphate-based positive electrode active material of a single particle type, having an average particle diameter (D₅₀) of 1 µm (component: LiFePO₄) in a weight ratio of 80:20.

### Comparative Example 1

A positive electrode slurry was prepared by mixing a first lithium iron phosphate-based positive electrode active material of a secondary particle type, having an average particle diameter (D₅₀) of 6 µm (component: LiFePO₄), a PVDF binder and a carbon black conductive agent in a weight ratio of 90:5:5 in a N-methyl-2-pyrrolidone (NMP) solvent. The positive electrode slurry was applied on one side of an aluminum current collector (thickness: 20 µm) so that a thickness after drying became 40 µm (loading amount: 10.3-11.4 mg/cm²), dried (remove NMP in an oven of 80°C and remove moisture in a vacuum oven of 110°C), and rolled so that the porosity of a positive electrode active material layer became 30-32% to manufacture a positive electrode.

### Comparative Example 2

A positive electrode was manufactured by the same method as Example 1 except for using a positive electrode material obtained by mixing a first lithium iron phosphate-based positive electrode active material of a secondary particle type, having an average particle diameter (D₅₀) of 6 µm (component: LiFePO₄) and a second lithium iron phosphate-based positive electrode active material of a single particle type, having an average particle diameter (D₅₀) of 1 µm (component: LiFePO₄) in a weight ratio of 95:5.

### Comparative Example 3

A positive electrode was manufactured by the same method as Example 1 except for using a positive electrode material obtained by mixing a first lithium iron phosphate-based positive electrode active material of a secondary particle type, having an average particle diameter (D₅₀) of 6 µm (component: LiFePO₄) and a second lithium iron phosphate-based positive electrode active material of a single particle type, having an average particle diameter (D₅₀) of 1 µm (component: LiFePO₄) in a weight ratio of 40:60.

The mixing weight ratios of the first lithium iron phosphate-based positive electrode active materials and the second lithium iron phosphate-based positive electrode active materials, used in Examples 1 to 4 and Comparative Example 1 are shown in Table 1.

**[Table 1]**

| Division | Mixing weight ratio | |
|---|---|---|
| | First lithium iron phosphate-based positive electrode active material | Second lithium iron phosphate-based positive electrode active material |
| Example 1 | 50 | 50 |
| Example 2 | 60 | 40 |
| Example 3 | 70 | 30 |
| Example 4 | 80 | 20 |
| Comparative Example 1 | 100 | 0 |
| Comparative Example 2 | 95 | 5 |
| Comparative Example 3 | 40 | 60 |

### Experimental Examples

### Experimental Example 1: Evaluation of Adhesive Strength between Positive Electrode Current Collector and Positive Electrode Active Material Layer

Each of the positive electrodes manufacture in Examples 1 to 4 and Comparative Examples 1 to 3 was cut into a size having a length of 10 cm and a width of 3 cm to prepare a sample for adhesive strength.

A tape (blue tape of Lotte Co.) having a size of a length of 8 cm and a width of 1.6 cm was attached to the sample for adhesive strength to prepare a sample for measurement.

The sample for measurement was fixed onto a tensile tester (Imada Co., MX2-110 Test Stand, DS2-50N Digital Force Gauge), specifically, the positive electrode was fixed at a grip at one side of the tensile tester, and the tape was fixed at a grip at the other side, and then, adhesive strength between the positive electrode current collector and the positive electrode active material layer was measured, while moving upward the grip where the positive electrode was fixed, and the results are shown in Table 2.

**[Table 2]**

| Division | Adhesive strength (N/cm) |
|---|---|
| Example 1 | 8.31 |
| Example 2 | 7.79 |
| Example 3 | 7.69 |
| Example 4 | 6.03 |
| Comparative Example 1 | 5.57 |
| Comparative Example 2 | 5.71 |
| Comparative Example 3 | 8.76 |

Referring to Table 2, it can be confirmed that the adhesive strength between the positive electrode current collector and the positive electrode active material layer was large and 6.00 N/cm or more, in the positive electrodes of Examples 1 to 4.

In contrast, it can be confirmed that the positive electrode of Comparative Example 1, composed of only secondary particles showed small adhesive strength between the positive electrode current collector and the positive electrode active material layer. In addition, it can be confirmed that the positive electrode of Comparative Example 2 including greater than 90 wt% of the first lithium iron phosphate-based positive electrode active material also showed small adhesive strength between the positive electrode current collector and the positive electrode active material layer.

### Experimental Example 2: Evaluation of Charge and Discharge Capacity of Battery

After manufacturing an electrode assembly by interposing a separator between each of the positive electrodes manufactured in Examples 1 to 4 and Comparative Examples 1 to 3 and a lithium metal negative electrode, the electrode assembly was positioned in a battery case, and an electrolyte was injected to manufacture a lithium secondary battery. In this case, as the electrolyte, an electrolyte obtained by dissolving 1 M of LiPF₆ in an organic solvent obtained by mixing ethylene carbonate:dimethyl carbonate in a volume ratio of 1:1, was used.

After that, an initial charge capacity and an initial discharge capacity were measured, while charging the lithium secondary battery at room temperature to 3.65 V at a constant current of 0.1 C, and discharging to 2.5 V at a constant current of 0.1 C, and the results are shown in Table 3.

**[Table 3]**

| Division | Initial charge capacity (mAh/g) | Initial discharge capacity (mAh/g) | Initial efficien cy (%) | 2 C discharge capacity (mAh/g) | Electrode electron conductiv ity (S/cm) |
|---|---|---|---|---|---|
| Example 1 | 157 | 155 | 98.73 | 115 | 0.12 |
| Example 2 | 158 | 158 | 100 | 116 | 0.12 |
| Example 3 | 158 | 158 | 100 | 117 | 0.13 |
| Example 4 | 160 | 158 | 98.75 | 117 | 0.13 |
| Comparati ve Example 1 | 163 | 157 | 96.32 | 120 | 0.16 |
| Comparati ve Example 2 | 162 | 157 | 96.91 | 120 | 0.16 |
| Comparati ve Example 3 | 157 | 155 | 98.73 | 114 | 0.11 |

Referring to Table 3, it can be confirmed that batteries including the positive electrodes of Examples 1 to 4 showed excellent charge and discharge capacity and initial efficiency and also showed excellent rate properties and electron conductivity in consideration that the 2 C discharge capacity was 115 mAh/g or more, and the electron conductivity was 0.12 S/cm or more.

In contrast, it can be confirmed that a battery including the positive electrode of Comparative Example 3 in which the first lithium iron phosphate-based positive electrode active material was less than 50 wt%, showed defects of showing degraded electron conductivity of the electrode and deteriorated rate properties.

In conclusion, the positive electrode according to the present invention includes a first lithium iron phosphate-based positive electrode active material having a large average particle diameter (D₅₀) (positive electrode active material having large-sized particles) and a second lithium iron phosphate-based positive electrode active material having a small average particle diameter (D₅₀) (positive electrode active material having small-sized particles) in a specific weight ratio, and the positive electrode active material having small-sized particles are positioned in pores among the positive electrode active material having large-sized particles to achieve the high density per volume of the positive electrode and high adhesive strength of 6.00 N/cm or more between a positive electrode current collector and a positive electrode active material layer, and accordingly, it can be found that the processability of the electrode can be improved, and the diverse performance of a battery applying the same can be improved.

### [Explanation of Symbols]

100: Positive electrode current collector
200: First lithium iron phosphate-based positive electrode active material
300: Second lithium iron phosphate-based positive electrode active material

## Claims

1. A positive electrode comprising:
a positive electrode current collector; and
a positive electrode active material layer formed on the positive electrode current collector,
wherein the positive electrode active material layer comprises a first lithium iron phosphate-based positive electrode active material having an average particle diameter (D₅₀) of 4 µm to 20 µm and a second lithium iron phosphate-based positive electrode active material having an average particle diameter (D₅₀) of 100 nm to 2 µm,
a weight ratio of the first lithium iron phosphate-based positive electrode active material and the second lithium iron phosphate-based positive electrode active material is 90:10 to 50:50, and
an adhesive strength between the positive electrode current collector and the positive electrode active material layer is 6.00 N/cm or more.

2. The positive electrode according to claim 1, wherein a ratio of the average particle diameters (D₅₀) of the first lithium iron phosphate-based positive electrode active material and the second lithium iron phosphate-based positive electrode active material is 2:1 to 200:1.

3. The positive electrode according to claim 1, wherein the first lithium iron phosphate-based positive electrode active material has a secondary particle type.

4. The positive electrode according to claim 1, wherein the second lithium iron phosphate-based positive electrode active material has one or more selected from a secondary particle type and a single particle type.

5. The positive electrode according to claim 1, wherein the first lithium iron phosphate-based positive electrode active material has a composition represented by the following Formula 1:
[Formula 1] Li₁₊ₐ₁Fe₁₋ₓ₁M¹ₓ₁(PO_{4-b1})X¹_{c1}
in Formula 1,
M¹ is one or more selected from Mn, Ni and Co,
X¹ is one or more selected from F, Cl and S, and
-0.1≤a1≤0.1, 0≤x1<1, 0≤b1≤1, and 0≤c1≤0.1 are satisfied.

6. The positive electrode according to claim 1, wherein the second lithium iron phosphate-based positive electrode active material has a composition represented by the following Formula 2:
[Formula 2] Li₁₊ₐ₂Fe₁₋ₓ₂M²ₓ₂(PO_{4-b2})X²_{c2}
in Formula 2,
M² is one or more selected from Mn, Ni and Co,
X² is one or more selected from F, Cl and S, and
-0.1≤a2≤0.1, 0≤x2<1, 0≤b2≤1, and 0≤c2≤0.1 are satisfied.

7. The positive electrode according to claim 1, wherein a porosity of the positive electrode active material layer is less than 40%.

8. The positive electrode according to claim 1, wherein the content of the second lithium iron phosphate-based positive electrode active material decreases from one side of the positive electrode active material layer, the one side being near the positive electrode current collector to the other side of the positive electrode active material layer, the other side being far from the positive electrode current collector.

9. A lithium secondary battery comprising the positive electrode according to claim 1.
